# EUROPÄISCHE PATENTANMELDUNG

(11) **EP 1 336 595 A2**
(43) Veröffentlichungstag der Anmeldung: **20.08.2003**
(21) Anmeldenummer: 03450039.7
(22) Anmeldetag: 13.02.2003
(51) Int. Cl.: C04B 28/30, C04B 28/34

(54) **Wasserfeste Zementmischung mit Magnesia sowie Verfahren zum Herstellen von wasserfesten Mörteln, Formkörper oder Estrichen mit derartigen Zementmischungen**

(30) Priorität: 15.02.2002 AT 972002 U
(71) Anmelder: Styromagnesit Steirische Magnesitindustrie GmbH, 8611 St. Katharein/Laming (AT)
(72) Erfinder: LECHNER, Alexander, D-38678 Clausthal Zellerfeld (DE)
(74) Vertreter: Haffner, Thomas M.

(57) **Zusammenfassung**

Die wasserfeste Zementmischung enthält neben kaustischem Magnesit Alkalihydrogenphosphate, wie z.B. NaH₂PO₄·2H₂O und/oder KH₂PO₄ und einen Abbindeverzögerer, wie z.B Borsäure und/oder Alkaliborate.

## Beschreibung

Die Erfindung bezieht sich auf eine wasserfeste Zementmischung mit Magnesia sowie auf ein Verfahren zum Herstellen von wasserfesten Mörteln, Formkörpern oder Estrichen mit derartigen Zementmischungen.

Zementmischungen auf der Basis von Magnesia sind beispielsweise als Sorelzement bekanntgeworden, wobei derartige hochfeste Sorelzementprodukte sich durch eine relativ einfache Verarbeitbarkeit und ein gutes Fließvermögen vor allen Dingen für die Herstellung von Estrichen eignen. Bei Sorelzement wird neben Magnesia Magnesiumchlorid eingesetzt, wobei Sorelzement selbst keinesfalls als wasserunlöslich bezeichnet werden kann und daher in der Regel aufwendig abgedichtet werden muss, wenn verhindert werden soll, dass bei eintretender Feuchtigkeit Chloride in Bewehrungseisen oder Bewehrungsstäbe einer darunter liegenden Betonschicht gelangen und dort zu einer vorzeitigen Korrosion Anlass geben. Gut fließfähige Estriche auf der Basis von kaustischem Magnesit sind in den bisher bekannten Ausbildungen und insbesondere in der Ausbildung als Sorelzement somit in der Handhabung insofern problematisch, als eine sorgfältige Abdichtung gewährleistet werden muss, weil die Gefahr von Wassereintritt nicht vollständig ausgeschlossen werden kann.

Gemäß einem weiteren bekannten Vorschlag wurde Schmelz- oder Sintermagnesia mit (NH₄)H₂PO₄ als Zement eingesetzt. Bei derartigen Zementmischungen wird aber bei der Aushärtung Ammoniak bzw. NH₃ freigesetzt, sodass die Verwendung in geschlossenen Innenräumen nicht ohne weiteres möglich ist. Zur Regelung der Abbindegeschwindigkeit wurde hier Natripolyphosphat zugesetzt, wobei zur Verringerung der NH₃-Freisetzung nur totgebranntes Material, und insbesondere Schmelz- oder Sintermagnesia, in Frage kam.

Die Erfindung zielt nun darauf ab, eine wasserfeste und weitgehend geruchlose Zementmischung mit gebranntem Magnesit zu schaffen, bei welcher eine nachträgliche Abdichtung auch dann nicht erforderlich erscheint, wenn Wassereintritt nicht ausgeschlossen werden kann und bei welcher weiters auf die Verwendung von sich unter störender Geruchsentwicklung zersetzenden und/oder korrosionsfördernden Substanzen, wie z.B. Chloriden, zur Gänze verzichtet werden kann.

Zur Lösung dieser Aufgabe besteht die erfindungsgemäße wasserfeste Zementmischung im wesentlichen darin, dass die Mischung neben kaustischem Magnesit Alkalihydrogenphosphate, wie z.B. NaH₂PO₄·2H₂O und/oder KH₂PO₄ und einen Abbindeverzögerer, wie z.B. Borsäure und/oder Alkaliborate, enthält. Die Verwendung von Alkalihydrogenphosphaten, wie beispielsweise Natriumdihydrogenphosphat und/oder Kaliumdihydrogenphosphat, hat bei Verwendung von kaustischem Magnesit zu überaus rasch abbindenden, wasserfesten Produkten geführt, wobei sich überraschenderweise gezeigt hat, dass eine Verarbeitung einer derartigen Mischung aus kaustischem Magnesit und Alkalihydrogenphosphaten nur dann ohne Schwierigkeiten gelingt, wenn gleichzeitig Abbindeverzögerer eingesetzt werden. Erfindungsgemäß werden als Abbindeverzögerer beispielsweise Borsäure und/oder Alkaliborate eingesetzt, wobei, wie es einer bevorzugten Weiterbildung entspricht, kaustischer Magnesit im Verhältnis zu den Alkalihydrogenphosphaten in einem Gewichtsverhältnis von 3:1 bis 1:5 eingesetzt werden kann, um zu relativ frühfesten Produkten mit hoher Endfestigkeit zu führen, welche sich durch hohe Wasserfestigkeit, Geruchlosigkeit und Chloridfreiheit auszeichnen. Überraschenderweise hat sich nun gezeigt, dass an die Qualität des kaustischen Magnesits für das Frühfestigkeitsverhalten und die Abbindegeschwindigkeit hohe Anforderungen gestellt werden müssen. Insbesondere konnte in Versuchen festgestellt werden, dass ohne Abbindeverzögerer zu kurze Abbindezeiten auftreten, was eine reibungslose Verarbeitung, insbesondere bei großen Flächen, erschwert. Diese überaus rasche Erhärtung und diese relativ kurze Abbindezeit kann zwar durch entsprechend geringere BET-Oberfläche von Magnesiumoxid, d.h. durch geringere Aktivität von Magnesia, geringfügig verzögert werden, wobei die Verwendung von entsprechend weniger aktiver Magnesia aber noch nicht die einwandfreie Verarbeitung über einen wirtschaftlich sinnvollen Zeitraum ermöglicht. Die gewählten Abbindeverzögerer wiederum erfordern erstaunlicherweise eine höhere Aktivität der Magnesia, um hinreichend verzögernd zu wirken, sodass hier einander widersprechende Kriterien vorzuliegen scheinen. Ein Optimum für die Wahl eines geeigneten kaustischen Magnesits für ein gutes Ansprechverhalten der Abbindeverzögerer konnte hiebei dann erzielt werden, wenn, wie es einer bevorzugten Ausbildung der wasserfesten Zementmischung entspricht, kaustischer Magnesit mit einem MgO-Anteil von > 75 Gew.-% eingesetzt ist und vorzugsweise kaustischer Magnesit in gemahlener Form mit einer BET-Oberfläche des MgO von mehr als 20 m²/g, vorzugsweise 35 - 45 m²/g eingesetzt ist. Die BET-Oberfläche wird in der Regel durch Stickstoffabsorption gemessen und stellt eines der brauchbaren Kriterien für die Quantifizierung der Aktivität von Magnesia dar. Die Aktivität unterschiedlicher Magnesia kann aber auch durch Abbindeversuche überprüft werden, wofür in der Praxis der "Vicat-Nadel-Test" zur Verfügung steht, welcher in DIN 196 Teil 3 genormt ist. Das in dieser Norm definierte Gerät ist für die Prüfung von Mörteln und mineralischen Bindemitteln geeignet, wobei speziell für die Prüfung der Ausgangsstoffe von Magnesia-Estrichen DIN 273 Teil 1 gilt. Die Aktivitätsbestimmung von MgO wird bei diesem Test durch Mischen mit einer MgCl₂-Lösung und Verfolgen der Abbindegeschwindigkeit vorgenommen. Als Abbindebeginn wird das Zeitintervall zwischen Mischbeginn und nicht mehr vollkommenen Zu-Boden-Sinken der Vicat-Nadel definiert, wobei das Abbindeende als das Zeitintervall zwischen Mischbeginn und dem Zeitpunkt, an dem die Vicat-Nadel nicht mehr in den Versuchskörper eindringt, definiert ist. Die im Rahmen der vorliegenden Erfindung besonders geeignete aktive Magnesia zeigt einen Abbindebeginn von wenigen Minuten wohingegen geringer aktive Magnesia Abbindebeginne von mehreren Stunden aufweist.

Die erfindungsgemäß eingesetzte aktive Magnesia kann durch Brennen von natürlich vorkommenden Magnesit erhalten werden, wodurch naturgemäß ein gewisses Maß an Verunreinigungen, und insbesondere Verunreinigungen durch CaCO₃, CaO, Eisenoxide, mineralische Siliziumverbindungen, Dolomit und andere in natürlichem Gestein vorkommende Mineralien durchaus nicht ausgeschlossen werden kann.

Die als Abbindeverzögerer eingsetzte Borsäure sollte in der Regel technische Reinheit haben und kann, zumindest teilweise, durch Salze der Borsäure, beispielsweise Natrium- oder Kaliumsalze, ersetzt werden.

Je nach gewünschter Endfestigkeit und um beispielsweise die Masse zu verbilligen, können Zuschlagstoffe eingesetzt werden, wobei als Zuschlagstoffe in erster Linie Basalt, Quarz, Fasern oder Holzspäne in Betracht kommen. Derartige inerte Zuschlagstoffe oder Füllstoffe beeinflussen somit in erster Linie den Preis des Produktes und können in weiterer Folge auch im Fall von Fasern oder Holzspänen die Festigkeit beeinflussen.

Mit Vorteil besteht die erfindungsgemäße Mischung hierbei darin, dass zusätzlich inerte Zuschlagstoffe, wie z.B. Quarz oder Basaltbruch, Fasern oder Holzspäne in Mengen von 25-75 Gew.-% bezogen auf die gesamte Zementmischung enthalten sind.

Wie bereits eingangs erwähnt, können Alkalihydrogenphosphate und in erster Linie wahlweise Natrium- oder Kaliumdihydrogenphosphate zum Einsatz gelangen, wobei im Fall des Natriumdihydrogenphosphates in der Regel auch Hydratwasser berücksichtigt werden muss. Mit Vorteil wird hierbei so vorgegangen, dass NaH₂PO₄·2H₂O und KH₂PO₄ in Gewichtsverhältnissen von 25:1 bis 1:1 eingesetzt sind.

Eine in Übereinstimmung mit der gewählten aktiven Magnesia besonders vorteilhafte Menge eines Abbindeverzögerers ist im Rahmen des erfindungsgemäßen Produktes dann gegeben, wenn Borsäure in Mengen von 1 bis 10 Gew.-%, vorzugsweise 1,5 bis 3 Gew.-% bezogen auf die Gesamtmischung eingesetzt ist.

Das erfindungsgemäße Verfahren zum Herstellen von wasserfesten Mörtel, Formkörpern oder Estrichen mit einer derartigen Zementmischung ist im wesentlich dadurch gekennzeichnet, dass die Zementmischung mit 8 bis 35 Gew.-% Wasser bezogen auf das Gewicht der Zementmischung verarbeitet wird, wobei vorzugsweise so vorgegangen wird, dass Borsäure in Wasser gelöst wird und der wasserunlösliche Rest der Borsäure mit den Phosphaten, Magnesia und ggf. inerten Füllstoffen trocken vermischt wird, worauf die Mischung dem gelöste Borsäure enthaltenden Wasser zugesetzt wird.

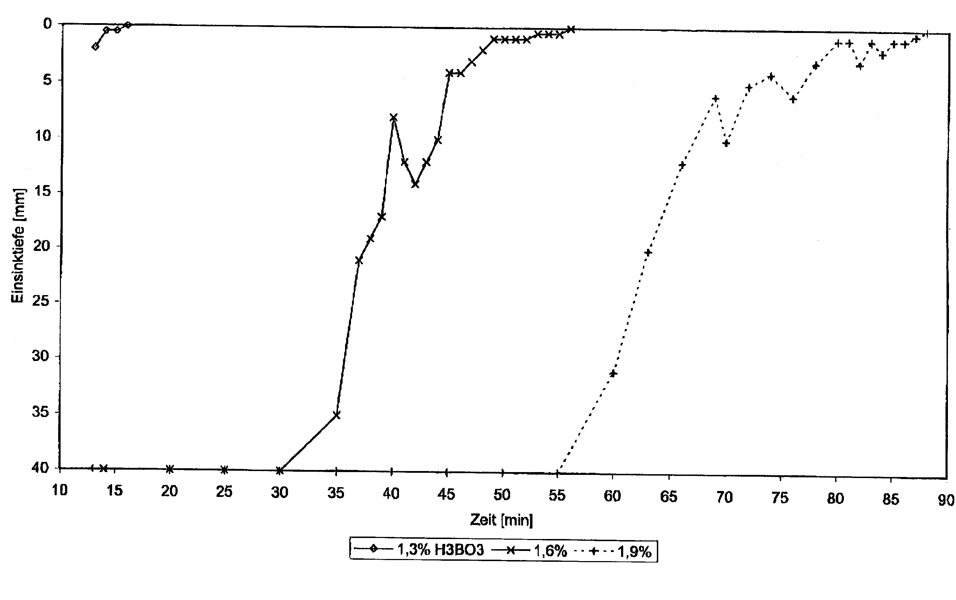

Die Erfindung wird nachfolgend anhand von Ausführungsbeispielen und einer Zeichnungsfigur näher erläutert. In der Zeichnung ist das Ergebnis eines Vicat-Versuches zur Bestimmung der Abbindegeschwindigkeit in Abhängigkeit von der Borsäuremenge graphisch dargestellt.

### Ausführungsbeispiele:

### Beispiel 1:

Es wurde eine Mischung aus
34,8 Gew.-% NaH₂PO₄·2H₂O,
1,6 Gew.-% KH₂PO₄,
36,7 Gew.-% Magnesia (kaustisch) mit ca. 80 Gew.-% MgO,
24,9 Gew.-% H₂O und
2,0 Gew.-% H₃BO₃ hergestellt. Das molare Verhältnis betrug 0,95 mol NaH₂PO₄:0,05 mol KH₂PO₄:3,1 mol MgO:7,8 mol H₂O.

26,70 g NaH₂PO₄·2H₂O; 1,20 g KH₂PO₄ und 1,53 g H₃BO₃ wurden eingewogen und in einem Kunststoffbecher vermischt. Diese trockene Mischung wurde zu 19,1 g H₂O in einen Kunststoffbecher gegeben und darin aufgelöst. Danach wurden 28,1 g kaustisch gebrannter Magnesit (ca. 80 Gew.-% MgO) der Firma Styromag, Marke K10, zugegeben. Diese Mischung wurde 10 min lang mit einem Metallrührstab händisch gerührt und dann zu drei Prismen der Dimension 1 x 1 x 6 cm in eine mit Vaseline gefettete PMMA-Form vergossen.

Die Proben wurden unter herrschendem Laborklima gelagert (ca. 20°C, ca. 60% rel.F.)

Die Prismen wurden nach 23 Stunden ausgeformt, abgemessen und dann die Festigkeit bestimmt.

Die Biegezugfestigkeit wurde auf einem Biegezugfestigkeitsprüfer der Firma Tonindustrie, Maschinen Nr. 10335, ermittelt, die Druckfestigkeit auf einem Druckfestigkeitsprüfer der Firma Tonindustrie, Maschinen Nr. 8464. Bei der Biegezugfestigkeit wurde der Dreipunktversuch mit einem Auflagerabstand von 5 cm und einer Laststeigerungsrate von 10 N/s durchgeführt, bei der Druckfestigkeit war die Prüffläche 1 x 1,475 cm groß und die Querhauptvorschubgeschwindigkeit 3 cm/min.

Die Biegezugfestigkeit nach 24 Stunden gemittelt aus 3 Proben war: 6,6 N/mm²

Die Druckfestigkeit nach 24 Stunden gemittelt aus 6 Proben war: 47,9 N/mm²

### Beispiel 2:

### Mischungsverhältnis in Molen:

0,5 mol NaH₂PO₄:0,5 mol KH₂PO₄:3,1 mol MgO:7,8 mol H₂O Mischungsverhältnis in Gew.-%
18,0% NaH₂PO₄·2H₂O
15,7% KH₂PO₄
36,1% K10 (enthält 80 Gew.-% MgO)
28,2% H₂O
2,0% H₃BO₃

13,80 g NaH₂PO₄·2H₂O; 12,00 g KH₂PO₄ und 1,53 g H₃BO₃ wurden eingewogen und in einem Kunststoffbecher vermischt. Diese trockene Mischung wurde zu 21,6 g H₂O in einen Kunststoffbecher gegeben und darin aufgelöst. Danach wurden 27,6 g kaustisch gebrannter Magnesit (ca. 80 Gew.-% MgO) der Firma Styromag, Marke K10, zugegeben. Diese Mischung wurde 10 min lang mit einem Metallrührstab händisch gerührt und dann zu drei Prismen der Dimension 1 x 1 x 6 cm in eine mit Vaseline gefettete PMMA-Form vergossen.

Die Proben wurden unter herrschendem Laborklima gelagert (ca. 20°C, ca. 60% rel.F.)

Die Prismen wurden nach 23 Stunden ausgeformt, abgemessen und dann die Festigkeit bestimmt.

Die Biegezugfestigkeit wurde auf einem Biegezufestigkeitsprüfer der Firma Tonindustrie, Maschinen Nr. 10335, ermittelt, die Druckfestigkeit auf einem Druckfestigkeitsprüfer der Firma Tonindustrie, Maschinen Nr. 8464. Bei der Biegezugfestigkeit wurde der Dreipunktversuch mit einem Auflagerabstand von 5 cm und einer Laststeigerungsrate von 10 N/s durchgeführt, bei der Druckfestigkeit war die Prüffläche 1 x 1,475 cm groß und die Querhauptvorschubgeschwindigkeit 3 cm/min.

Die Biegezugfestigkeit nach 24 Stunden gemittelt aus 3 Proben war: 6,8 N/mm²

Die Druckfestigkeit nach 24 Stunden gemittelt aus 6 Proben war: 46,3 N/mm²

### Beispiel 3:

### Mischungsverhältnis in Molen:

0,86 mol NaH₂PO₄:0,14 mol KH₂PO₄:3,2 mol MgO:8,2 mol H₂O Mischungsverhältnis in Gew.-%:
13,1% NaH₂PO₄·2H₂O
1,9% KH₂PO₄
15,8% KS (enthält 80 Gew.-% MgO)
11,4% H₂O
1,3% Borsäure (98% H₃BO₃)
56,6% inerter Zuschlagstoff (25% Quarz rund 0,1/0,5; 75% Basalt Bruch 2/4)

591,4 g NaH₂PO₄·2H₂O; 83,9 g KH₂PO₄; 710,6 g kaustisch gebrannter Magnesit (ca. 80 Gew.-% MgO) der Firma Styromag, Marke KS, wobei KS einen kaustischen Magnesit mit höherer Aktivität als K10 bezeichnet; 37,5 g Borsäure; 637,5 g Quarz, rund 0,1/0,5 und 1912,5 g Basalt Bruch 2/4 wurden eingewogen und in einem Kunststoffeimer vermischt. 21,4 g Borsäure wurden zu 514,1 g H₂O gegeben und bis zur vollkommenen Auflösung verrührt. Die trockene Mischung wurde zur Lösung hinzugefügt und 10 min mit einem Holzkochlöffel händisch gerührt. Die dickflüssige Mischung wurde zu Prismen der Dimension 4 x 4 x 16 cm in eine mit Vaseline gefettete Hart-PVC-Form vergossen und ein Ring für den Vicat-Nadel-Test gefüllt.

Der Vicat-Nadel-Test nach DIN 196 Teil 3 wurde von einer automatischen Prüfapparatur der Firma RMU durchgeführt bis die Probe abgebunden hatte.

Die Proben wurden unter herrschendem Laborklima gelagert (ca. 20°C, ca. 60% rel.F.)

Die Prismen wurden nach 23 Stunden ausgeformt, abgemessen und im Labor frei liegend bis zur Festigkeitsprüfung weitergelagert.

Die Biegezugfestigkeit wurde auf einem Biegezugfestigkeitsprüfer der Firma Tonindustrie, Maschinen Nr. 10335, und die Druckfestigkeit auf einem Druckfestigkeitsprüfer der Firma Toni Technik, Modell 2011/2020, ermittelt. Bei der Biegezugfestigkeit wurde der Dreipunktversuch mit einem Auflagerabstand von 10 cm und einer Laststeigerungsrate von 50 N/s durchgeführt, bei der Druckfestigkeit war die Prüffläche 4 x 4 cm groß und der Versuch wurde nach EN 196 durchgeführt. Der Abbindebeginn war nach 47 min, das Abbindeende nach 57 min festgestellt worden.

Die Biegezugfestigkeit nach 24 Stunden gemittelt aus 3 Proben war: 5,1 N/mm²

Die Druckfestigkeit nach 24 Stunden gemittelt aus 6 Proben war: 29,8 N/mm²

Die Biegezugfestigkeit nach 7 Tagen gemittelt aus 3 Proben war: 6,7 N/mm²

Die Druckfestigkeit nach 7 Tagen gemittelt aus 6 Proben war: 54,0 N/mm²

Die Biegezugfestigkeit nach 28 Tagen gemittelt aus 3 Proben war: 7,2 N/mm²

Die Druckfestigkeit nach 28 Tagen gemittelt aus 6 Proben war: 55,9 N/mm²

### Beispiel 4:

### Mischungsverhältnis in Molen:

0,84 mol NaH₂PO₄:0,16 mol KH₂PO₄:3,2 mol MGO:8,2 mol H₂O Mischungsverhältnis in Gew.-%:
12,8% NaH₂PO₄·2H₂O
3,1% KH₂PO₄
15,7% KS (enthält 80 Gew.-% MgO)
11,5% H₂O
1,4% Borsäure (enthält 98% H₃BO₃)
56,5% inerter Zuschlagstoff (25% Quarz rund 0,1/0,5; 75% Basalt Bruch 2/4)

577,2 g NaH₂PO₄·2H₂O; 95,8 g KH₂PO₄; 710,0 g kaustisch gebrannter Magnesit (ca. 80 Gew.-% MgO) der Firma Styromag, Marke KS; 42,5 g Borsäure; 637,5 g Quarz, rund 0,1/0,5 und 1912,5 g Basalt Bruch 2/4 wurden eingewogen und in einem Kunststoffeimer vermischt. 21,5 g Borsäure wurden zu 516,9 g H₂O gegeben und bis zur vollkommenen Auflösung verrührt. Die trockene Mischung wurde zur Lösung hinzugefügt und 10 min mit einem Holzkochlöffel händisch gerührt. Die dickflüssige Mischung wurde zu Prismen der Dimension 4 x 4 x 16 cm in eine mit Vaseline gefettete Hart-PVC-Form vergossen und ein Ring für den Vicat-Nadel-Test gefüllt.

Der Vicat-Nadel-Test nach DIN 196 Teil 3 wurde von einer automatischen Prüfapparatur der Firma RMU durchgeführt bis die Probe abgebunden hatte.

Die Proben wurden unter herrschendem Laborklima gelagert (ca. 20°C, ca. 60% rel.F.).

Die Prismen wurden nach 23 Stunden ausgeformt, abgemessen und im Labor frei liegend bis zur Festigkeitsprüfung weitergelagert.

Die Biegezugfestigkeit wurde auf einem Biegezugfestigkeitsprüfer der Firma Tonindustrie, Maschinen Nr. 10335, und die Druckfestigkeit wurde auf einem Druckfestigkeitsprüfer der Firma Toni Technik, Modell 2011/2020, ermittelt. Bei der Biegezugfestigkeit wurde der Dreipunktversuch mit einem Auflagerabstand von 10 cm und einer Laststeigerungsrate von 50 N/s durchgeführt, bei der Druckfestigkeit war die Prüffläche 4 x 4 cm groß und der Versuch wurde nach EN 196 durchgeführt. Der Abbindebeginn war nach 55 min, das Abbindeende nach 70 min festgestellt worden.

Die Biegezugfestigkeit nach 24 Stunden gemittelt aus 3 Proben war: 4,8 N/mm²

Die Druckfestigkeit nach 24 Stunden gemittelt aus 6 Proben war: 29,1 N/mm²

Die Biegezugfestigkeit nach 7 Tagen gemittelt aus 3 Proben war: 6,6 N/mm²

Die Druckfestigkeit nach 7 Tagen gemittelt aus 6 Proben war: 55,3 N/mm²

Die Biegezugfestigkeit nach 28 Tagen gemittelt aus 3 Proben war: 6,9 N/mm²

Die Druckfestigkeit nach 28 Tagen gemittelt aus 6 Proben war: 54,1 N/mm²

### Beispiel 5, 6 und 7:

### Mischungsverhältnis in Molen:

0,75 mol NaH₂PO₄:0,15 mol KH₂PO₄:3,1 mol MGO:7,8 mol H₂O Mischungsverhältnis in Gew.-%:

### Beispiel 5:

16,9% NaH₂PO₄·2H₂O
4,9% KH₂PO₄
22,5% K10 (80% MgO)
16,3% H₂O
1,6% H₃BO₃
37,8% Quarz

### Beispiel 6:

16,9% NaH₂PO₄·2H₂O
4,9% KH₂PO₄
22,5% K10 (80% MgO)
16,4% H₂O
1,3% H₃BO₃
38,0% Quarz

### Beispiel 7:

16,8% NaH₂PO₄·2H₂O
4,9% KH₂PO₄
22,4% K10 (80% MgO)
16,3% H₂O
1,9% H₃BO₃
37,7% Quarz

111,3 g NaH₂PO₄·2H₂O; 32,3 g KH₂PO₄ und 10,7 g (Beispiel 5) bzw. 8,7 g (Beispiel 6) bzw. 12,7 g (Beispiel 7) H₃BO₃ wurden eingewogen und in einem Kunststoffbecher vermischt. Diese trockene Mischung wurde zu 107,9 g H₂O in einem Kunststoffgefäß gegeben und darin aufgelöst. Danach wurden 148,5 g kaustisch gebrannter Magnesit (ca. 80% MgO) der Firma Styromag, Marke K10, zugegeben. Diese Mischung wurde 8 min lang mit einem Holzkochlöffel händisch gerührt. Dann wurden 250,0 g Quarz zugegeben und weitere 2 min lang gerührt. Die Mischung wurde in den Ring für den Vicat-Nadel-Test abgefüllt und dann die Eindringtiefe der konischen Nadel zumindest alle 5 min bestimmt.

Die Ergebnisse sind im beigefügten Diagramm zu sehen:

Als Abbindebeginn ergaben sich:

| | |
|---|---|
| Beispiel 5 | 35 min |
| Beispiel 6 | < 15 min |
| Beispiel 7 | 60 min |

Als Abbindeende ergaben sich:

| | |
|---|---|
| Beispiel 5 | 56 min |
| Beispiel 6 | < 16 min |
| Beispiel 7 | 88 min |

Im Zusammenhang mit den Beispielen 5, 6 und 7 wurde, wie aus den oben angegebenen Gewichtsverhältnissen ersichtlich, bei im wesentlich unveränderten Anteilen der Mischungsbestandteile Alkaliphosphat, kaustischer Magnesia, Quarz und Wasser jeweils der Borsäureanteil variiert, um auf diese Weise die Abhängigkeit der Abbindegeschwindigkeit von der Borsäuremenge zu dokumentieren. Dies ist in der Zeichnungsfigur noch entsprechend verdeutlicht. Wie in der Zeichnungsfigur ersichtlich, wurde in Beispiel 6 bei einem Borsäuregehalt von 1,3 Gew.-% ein Abbindebeginn bereits vor Ablauf von 15 min und ein Abbindeende bei etwa 16 min beobachtet. Demgegenüber ergaben sich bei einer Erhöhung der Borsäuremenge auf 1,6 Gew.-% in Übereinstimmung mit Beispiel 5 ein Abbindebeginn nach 35 min und ein Abbindeende nach etwa 56 min, wobei eine weitere Erhöhung des Zusatzes von Borsäure auf 1,9 Gew.-% H₃BO₃ zu einer Verschiebung des Abbindebeginns auf etwa 60 min und des Abbindeendes auf 88 min ergab. Diese drei Beispiele zeigen somit deutlich den besonders vorteilhaften Einsatz von H₃BO₃ in Mengen von 1,5 bis 2 Gew.-% bezogen auf die in diesem Fall auch Wasser enthaltende Mischung wie sie für die Durchführung des Vicat-Nadel-Testes erforderlich ist.

## Patentansprüche

1. Wasserfeste Zementmischung mit Magnesia, **dadurch gekennzeichnet, dass** die Mischung neben kaustischem Magnesit Alkalihydrogenphosphate, wie z.B. NaH₂PO₄·2H₂O und/oder KH₂PO₄ und einen Abbindeverzögerer, wie z.B. Borsäure und/oder Alkaliborate, enthält.

2. Wasserfeste Zementmischung mit Magnesia, **dadurch gekennzeichnet, dass** kaustischer Magnesit und Alkalihydrogenphosphate in einem Mengenverhältnis von 3:1 bis 1:5 eingesetzt sind.

3. Wasserfeste Zementmischung mit Magnesia nach Anspruch 1 oder 2, **dadurch gekennzeichnet, dass** zusätzlich inerte Zuschlagstoffe, wie z.B. Quarz oder Basaltbruch, Fasern oder Holzspäne in Mengen von 25-75 Gew.-% bezogen auf die gesamte Zementmischung enthalten sind.

4. Wasserfeste Zementmischung mit Magnesia nach Anspruch 1, 2 oder 3, **dadurch gekennzeichnet, dass** NaH₂PO₄·2H₂O und KH₂PO₄ in Gewichtsverhältnissen von 25:1 bis 1:1 eingesetzt sind.

5. Wasserfeste Zementmischung mit Magnesia nach einem der Ansprüche 1 bis 4, **dadurch gekennzeichnet, dass** Borsäure in Mengen von 1 bis 10 Gew.-%, vorzugsweise 1,5 bis 3 Gew.-% bezogen auf die Gesamtmischung eingesetzt ist.

6. Wasserfeste Zementmischung mit Magnesia nach einem der Ansprüche 1 bis 5, **dadurch gekennzeichnet, dass** kaustischer Magnesit mit einem MgO-Anteil von > 75 Gew.-% eingesetzt ist.

7. Wasserfeste Zementmischung mit Magnesia nach einem der Ansprüche 1 bis 6, **dadurch gekennzeichnet, dass** kaustischer Magnesit in gemahlener Form mit einer BET-Oberfläche des MgO von mehr als 20 m²/g, vorzugsweise 35 - 45 m²/g eingesetzt ist.

8. Verfahren zum Herstellen von wasserfesten Mörteln, Formkörpern oder Estrichen mit einer Zementmischung nach einem der Ansprüche 1 bis 7, **dadurch gekennzeichnet, dass** die Zementmischung mit 8 bis 35 Gew.-% Wasser bezogen auf das Gewicht der Zementmischung verarbeitet wird.

9. Verfahren nach Anspruch 8, **dadurch gekennzeichnet, dass** Borsäure in Wasser gelöst wird und der wasserunlösliche Rest der Borsäure mit den Phosphaten, Magnesia und ggf. inerten Füllstoffen trocken vermischt wird, worauf die Mischung den gelöste Borsäure enthaltenden Wasser zugesetzt wird.
